# EUROPÄISCHE PATENTSCHRIFT

(11) **EP 0 888 913 B1**
(45) Veröffentlichungstag und Bekanntmachung des Hinweises auf die Patenterteilung: **26.03.2003**
(21) Anmeldenummer: 98110311.2
(22) Anmeldetag: 05.06.1998
(51) Int. Cl.: B60H 1/00, F01P 11/20

(54) **Wärmeflussverbund in Kraftfahrzeugen**
Thermal flux array in motor vehicles
Ensemble de flux thermique dans des véhicules à moteur

(30) Priorität: 04.07.1997 DE 19728724
(43) Veröffentlichungstag der Anmeldung: 07.01.1999
(73) Patentinhaber: Bayerische Motoren Werke Aktiengesellschaft, 80788 München (DE)
(72) Erfinder: Fröschl, Joachim, 82211 Herrsching (DE); Lindner, Thomas, 80807 München (DE); Weiss, Ralf, 82275 Emmering (DE); Schlachetzki, Ulrich, 81927 München (DE); Achilles, Dietrich, 85293 Reichertshausen (DE)

(56) Entgegenhaltungen:
- DE-A- 4 040 196
- DE-B- 1 276 409
- DE-C- 19 508 102
- DE-U- 8 314 309

## Beschreibung

Die Erfindung bezieht sich auf einen Wärmeflußverbund in Kraftfahrzeugen bestehend aus einem zusammenhängenden Kühlmittelleitungssystem und aus mit dem Kühlmittelleitungssystem wirkverbundenen Funktionskomponenten, wie z. B. einer Heizungsanlage, einer Brennkraftmaschine, einem Kühler, einem Latentwärmespeicher, einer Standheizung und/oder einem Getriebe. Diese Komponenten sind funktionell im wesentlichen voneinander unabhängig, sind jedoch üblicherweise durch einen Wärmeflußverbund in Form eines Kühlmittelleitungssystems wärmetechnisch gekoppelt. Die Funktionskomponenten sind mit dem Kühlmittelleitungssystem derart wirkverbunden, daß jede Komponente dem Kühlmittelleitungssystem Wärme entziehen und/oder an das Kühlmittelleitungssystem Wärme abgeben kann. Zwar wird die Wärmeabgabe und die Wärmezufuhr teilweise von den einzelnen Funktionskomponenten für sich selbst entsprechend vorgegebener Anforderungen gesteuert, jedoch wird von den einzelnen Funktionskomponenten nicht berücksichtigt, welche Wärmezufuhr bzw. Wärmeabfuhr durch die jeweils anderen Funktionskomponenten vorgenommen wird und vorgenommen werden könnte. Die Wärmezufuhr bzw. die zugeführten Wärmeflüsse und die Wärmeabfuhr bzw. die abgehenden Wärmeflüsse bezogen auf die einzelnen Funktionskomponenten werden in Abhängigkeit von Sensorsignalen ermittelt und durch die Ansteuerung von einzelnen Funktionskomponenten zugeordneten Aktuatoren unabhängig von den jeweils anderen Funktionskomponenten beeinflußt. Dieses dezentrale Wärmemanagement führt zu Einbußen beim Gesamtwirkungsgrad des Wärmeflußverbundes. Anforderungen an den Komfort oder an die Wirtschaftlichkeit einer Funktionskomponente werden nur unzureichend erfüllt, da durch die unabhängige Wärmeflußsteuerung unvorhersehbare Einflüsse der einen Funktionskomponenten auf die anderen Funktionskomponenten verursacht werden.

Es ist daher Aufgabe der Erfindung, einen Wärmeflußverbund eingangs genannter Art derart zu verbessern, daß sowohl sein Gesamtwirkungsgrad als auch wärmeflußbezogene Funktionen, insbesondere im Hinblick auf den Komfort oder die Wirtschaftlichkeit, optimiert werden.

Diese Aufgabe wird durch die Merkmale des Patentanspruchs 1 gelöst. Die Unteransprüche sind vorteilhafte Weiterbildungen der Erfindung.

Erfindungswesentlich ist die zentrale Steuerung des gesamten Wärmeflußverbundes bestehend aus dem zusammenhängenden Kühlmittelleitungssystem und aus allen mit dem Kühlmittelleitungssystem wirkverbundenen Funktionskomponenten. Zur Optimierung des Gesamtwirkungsgrades nimmt ein zentrales elektronisches Steuergerät die Beeinflussung der Wärmeflüsse derart vor, daß die Summe aller von den Funktionskomponenten abgehenden Wärmeflüsse in etwa gleich der Summe aller den Funktionskomponenten zugeführten Wärmeflüsse ist. Funktionskomponenten, wie z. B. die Heizungsanlage, die Brennkraftmaschine, der Kühler, ein Latentwärmespeicher und/oder eine Standheizung bilden zusammen mit dem zentralen elektronischen Steuergerät wärmeflußbezogen eine funktionale Einheit. Vorzugsweise ist das zentrale Steuergerät einer Funktionskomponente, beispielsweise der Heizungsanlage, zugeordnet. Die Funktionskomponenten sind zumindest zum Teil mit elektronischen Einheiten ausgestattet, durch die beispielsweise Sensorsignale erfaßt werden können und/oder Aktuatoren angesteuert werden können. Funktionskomponenten, die keine eigene elektronische Einheit aufweisen, die jedoch mit Sensoren und/oder Aktuatoren ausgestattet sind, können auch durch elektronische Einheiten anderer Funktionskomponenten bedient werden. Entsprechend vorgegebener Arbeitsweisen, z. B. komfortoptimiert oder kraftstoffverbrauchsoptimiert, die entweder automatisch oder durch den Fahrer manuell vorgebbar sind, können die Wärmeflüsse sämtlicher Funktionskomponenten unterschiedlich beeinflußt werden. Beispielsweise kann eine Fahreranforderung entweder eine schnelle Fahrgastraumaufheizung oder eine schnelle Brennkraftmaschinenerwärmung sein. In Abängigkeit von einer Komfort- oder Wirtschaftlichkeitsanforderung, kann beispielsweise die Funktionskomponente Standheizung im Wärmeflußverbund zuheizen oder nicht.

Das zentrale elektronische Steuergerät kann beispielsweise über ohnehin vorhandene Datenbussysteme mit Sensoren und/oder den zumindest einzelnen Funktionskomponenten zugeordneten elektronischen Einheiten kommunizieren, um insbesondere die momentanen Ist-Wärmeflüsse und/oder die momentan möglichen Wärmeflußänderungen jeder Funktionskomponente zu ermitteln. Bei einer Änderung eines momentanen Ist-Wärmeflusses, d.h. entweder bei einer Änderung des abgehenden Wärmeflusses oder des zugeführten Wärmeflusses, entsprechend eines neuen Soll-Wärmeflusses einer Komponente wird zunächst die Summe aller von den Funktionskomponenten abgehenden Wärmeflüsse ungleich der Summe aller den Funktionskomponenten zugeführten Wärmeflüsse. Aufgabe des zentralen elektronischen Steuergeräts ist es, beispielsweise entsprechend vorgegebener Arbeitsweisen, die geforderte Summengleichheit auf optimale Weise wiederherzustellen. Hierzu veranlaßt das zentrale elektronische Steuergerät entsprechend der momentan möglichen Wärmeflußänderungen jeder Funktionskomponente die Änderung der momentanen Ist-Wärmeflüsse der Funktionskomponenten derart, daß die über die vorgegebene Arbeitsweise angeforderte Funktion, z. B. komfortoptimiert oder verbrauchsoptimiert, erreicht wird.

Durch diesen erfindungsgemäßen Wärmeflußverbund werden ohnehin vorhandene Funktionskomponenten, Sensoren, Aktuatoren und Datenverbindungen ausgenutzt, um ein optimales und flexibles Energiemanagement zu erreichen.

DE 4040196 beschreibt eine Fahrzeug-Heizungsanlage mit einer Standheizung und einem Wärmespeicher, wobei möghichst schwell Wärme bereit gestellt werden soll und auch eine schnelle Erwärmung der Fzg. - Brennkraftmaschine erreicht werden soll. In DE 4040196 beschrieben ist ferner, bei welchen Temperaturen oder Temperatur-Differenzen welche Wärmequellen ein - oder ausgeschaltet werden. Zwar ist in Fig. 2a von DE 4040196 auf der Ordinate eine Wärmemenge aufgetragen, jedoch berücksichtigt das bei DE 4040196 vergesehene Stenergerät Keinen Wärmefluss.

In der Zeichnung ist ein Ausführungsbeispiel der Erfindung dargestellt. Es zeigt
- Fig. 1: den mechanischen Aufbau eines erfindungsgemäßen Wärmeflußverbundes und
- Fig. 2: ein theoretisches Beispiel für ein zentrales Wärmeflußmanagement mittels des erfindungsgemäßen Wärmeflußverbundes.

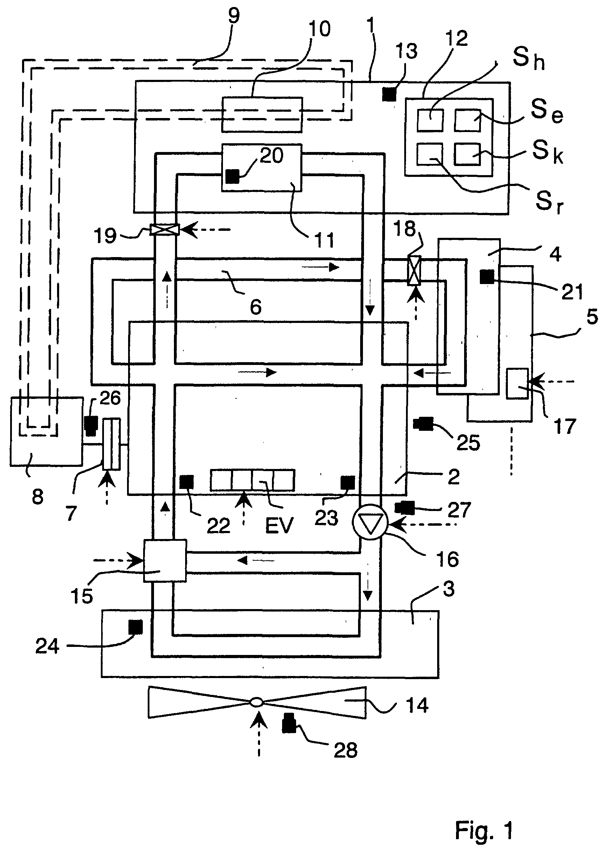

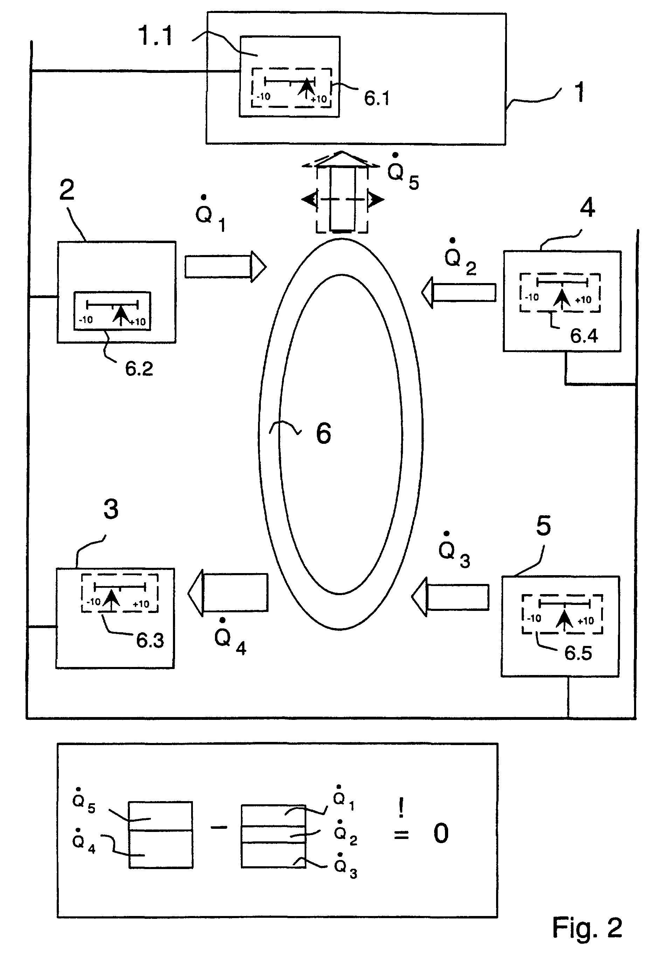

In Fig. 1 sind als Funktionskomponenten eine Heizungsanlage 1, eine Brennkraftmaschine 2, ein Kühler 3, ein Latentwärmespeicher 4 und eine Standheizung 5 mit einem Kühlmittelleitungssystem 6 wärmetechnisch wirkverbunden. Die Brennkraftmaschine 2 kann über eine steuerbare Kupplung 7 mit einem Klimakompressor 8 zusammenwirken, der über eine Kältemittelleitung 9 und einen Verdampfer 10 die Heizungsanlage 1 als Klimaanlage ergänzen kann. Das Kühlmittelleitungssystem 6 gibt über einen Wärmetauscher 11 Wärme an die Heizungsanlage 1, insbesondere in den Fahrgastraum, ab. Die Heizungsanlage 1 ist mit einem Bedienelement 12 versehen, das im dargestellten Beispiel vier durch den Fahrer betätigbare Schalter Sₕ, Sᵣ, Sₑ und Sₖ aufweist. Ausgehend von dem momentanen Ist-Wärmefluß in die Heizungsanlage 1 bzw. in den Fahrgastraum kann über den Schalter Sₕ eine Erhöhung und durch den Schalter Sᵣ eine Reduzierung als Soll-Wärmefluß vorgegeben werden. Über die Schalter Sₑ und Sₖ ist beispielsweise eine Arbeitsweise "Economy" zur Energieverbrauchsminimierung oder eine Arbeitsweise "Komfort" zur wärmebezogenen Komfortoptimierung einstellbar. Der Heizungsanlage 1 sind ein Fahrgastraum-Temperatursensor 13 und ein Wärmetauscher-Temperatursensor 20 zugeordnet. Darüber hinaus ist der Heizungsanlage 1 ein Aktuator 19 in Form eines Ventils in der Kühlmittelleitung, die für die Kühlmittelzufuhr in die Heizungsanlage 1 zuständig ist, zugeordnet. Die elektrischen Signale der Temperaturensensoren 13 und 20, der Schalter der Bedieneinheit 12 und des Ventils 19 werden in einer der Heizungsanlage 1 zugeordneten elektronischen Einheit (6.1; 1.1 vgl. Fig. 2) verarbeitet.

Der Brennkraftmaschine 2 sind am Kühlmitteleingang des Kühlmittelleitungssystems 6 ein Temperatursensor 22 und/oder am Kühlmittelausgang ein Temperatursensor 23 zugeordnet. Weiterhin sind der Brennkraftmaschine 2 ein Brennkraftmaschinendrehzahlsensor 25, ein Klimakompressordrehzahlsensor 26 und ein Wasserpumpendrehzahlsensor 27 zugeordnet. Die elektrischen Signale der Sensoren 22, 23, 25, 26 und 27 werden vorzugsweise einer der Brennkraftmaschine 2 zugeordneten elektronischen Einheit (6.2, vgl. Fig. 2) zugeführt.

Die der Brennkraftmaschine 2 zugeordneten Aktuatoren sind insbesondere die Einspritzventile EV, die Kupplung 7 zum Klimakompressor 8, das Thermostatventil 15 und die Wasser- bzw. Kühlmittelpumpe 16. Die Aktuatoren EV, 7, 15 und 16 werden ebenfalls von der elektronischen Einheit (6.2) der Brennkraftmaschine 2 angesteuert.

Dem Kühler 3 ist ein Temperatursensor 24, ein Lüfterdrehzahlsensor 28 zur Ermittlung der Drehzahl des Lüfters 14 und ein hier nicht dargestellter Aktuator zur Lüfterdrehzahländerung zugeordnet. Die elektrischen Signale der dem Kühler 3 zugeordneten Sensoren und Aktuatoren können entweder in einer dem Kühler 3 zugeordneten elektronischen Einheit (6.3, Fig. 2) verarbeitet werden oder zur Kostenreduzierung in der elektronischen Einheit 6.2 der Brennkraftmaschine 2 mitverarbeitet werden.

Dem Latentwärmespeicher 4 ist ebenfalls ein Temperatursensor 21 sowie ein steuerbares Ventil 18 zugeordnet. Die elektrischen Signale des Temperatursensors 21 und des steuerbaren Ventils 18 können ebenfalls entweder in einer dem Latentwärmespeicher 4 zugeordneten elektronischen Einheit (6.4, Fig. 2) verarbeitet oder auch in der elektronischen Einheit 6.2 der Brennkraftmaschine 2 mitverarbeitet werden.

Die Standheizung 5 weist beispielsweise einen Brenner 17 auf, der ebenfalls durch eine der Standheizung 5 zugeordnete elektronische Einheit (6.5, Fig. 2) angesteuert werden kann. Die Funktion der Standheizung 5 in Verbindung mit der Ansteuerung des Brenners 17 kann jedoch beispielsweise mit den Funktionen in der der Heizungsanlage 1 zugeordneten elektronischen Einheit (6.1) zusammengefaßt werden.

In Fig. 2 sind schematisch Ist- bzw. Soll-Wärmeflüsse *Q̇*₁ bis *Q̇*₅, in Form von abgehenden Wärmeflüssen *Q̇*₁ bis *Q̇*₃ und zugeführten Wärmeflüssen *Q̇*₄ und *Q̇*₅ bezogen auf die einzelnen Funktionskomponenten 1 bis 5 schematisch dargestellt. Die Anforderung an den erfindungsgemäßen Wärmeflußverbund ist, daß die Summe aller von den Funktionskomponenten 1 bis 5 abgehenden Wärmeflüsse *Q̇*₁ bis *Q̇*₃ gleich der Summe aller den Funktionskomponenten 1 bis 5 zugeführten Wärmeflüsse *Q̇*₄ und *Q̇*₅ ist. In Fig. 2 wird der erfindungsgemäße Wärmeflußverbund in Form eines zentralen Energiemanagements von dem zentralen Steuergerät 1.1 ausgeführt, das vorzugsweise gleich dem elektronischen Steuergerät der Heizungsanlage 1 ist bzw. im Steuergerät der Heizungsanlage 1 integriert ist. Auch die der Heizungsanlage 1 zugeordnete elektronische Einheit 6.1 ist vorzugsweise in dem zentralen elektronischen Steuergerät 1.1 integriert. Die Funktionskomponenten 1 bis 5 sind über einen Datenverbund (dicke Linie) miteinander verbunden. Dieser Datenverbund kann beispielsweise ein Datenbus zwischen den elektronischen Einheiten 6.1 bis 6.5 sein. Fehlen beispielsweise den Funktionskomponenten 3 bis 5 eigene zugeordnete elektronische Einheiten, steht der schematisch dargestellte Datenverbund für elektrische Leitungen zu den diesen Funktionskomponenten 3 bis 5 zugeordneten Sensoren und/oder Aktuatoren.

Über diesen Datenverbund ist dem zentralen elektronischen Steuergerät 1.1 bekannt, welche momentanen Ist-Wärmeflüsse *Q̇*₁ bis *Q̇*₅ an den einzelnen Funktionskomponenten 1 bis 5 vorherrschen. Diese momentanen Ist-Wärmeflüsse werden beispielsweise in Form eines Wertes (kleine Pfeile) bezogen auf eine normierte Skala (z. B. von -10 bis +10) dargestellt. Durch den Wert auf dieser normierten Skala ist für das zentrale Steuergerät 1.1 gleichzeitig ersichtlich, welche möglichen Wärmeflußänderungen durch jede Funktionskomponente 1 bis 5 momentan möglich wäre, wenn zumindest eine der Funktionskomponenten eine Änderung eines Soll-Wärmeflusses anfordert.

Wird beispielsweise durch den Fahrer über den Schalter Sₕ ein erhöhter Wärmefluß *Q̇*₅ angefordert (Breite des den Wärmefluß darstellenden Pfeils wird größer) wird das geforderte Gleichgewicht zwischen den abgehenden Wärmeflüssen *Q̇*₁ bis *Q̇*₃ und den zugeführten Wärmeflüssen *Q̇*₄ und *Q̇*₅ verlassen, und muß in Abhängigkeit von den momentan möglichen Wärmeflußänderungen der einzelnen Funktionskomponenten und ggf. entsprechend vorgegebener Arbeitsweisen wieder hergestellt werden.

Ist beispielsweise durch den Fahrer über die Betätigung des Schalters Sₑ die Arbeitsweise "Economy" ausgewählt, wird über das zentrale Steuergerät 1.1 die erhöhte Wärmeflußänderung bei *Q̇*₅ derart erzeugt, daß beispielsweise kein erhöhter Kraftstoffverbrauch durch die Brennkraftmaschine 2 erforderlich ist. Die Differenz zwischen dem Ist-Wärmefluß *Q̇*₅ und dem nunmehr erhöhten Soll-Wärmefluß, wird also nicht von der Brennkraftmaschine 2 gefordert, sondern beispielsweise vom Latentwärmespeicher 4, der durch den Wert auf der normierten Skala Potential für eine Wärmeflußänderung in Richtung Erhöhung des Wärmeflusses anzeigt. Somit kann beispielsweise der Wärmefluß *Q̇*₂ um den Wert erhöht werden, der für die Erhöhung des Wärmeflusses *Q̇*₅ erforderlich ist, um das geforderte Gleichgewicht im Wärmeflußverbund wiederherzustellen.

Ist jedoch durch den Fahrer der Schalter Sₖ betätigt, und somit die Arbeitsweise "Komfort" ausgewählt, wodurch beispielsweise eine möglichst schnelle Wärmeflußerhöhung gefordert ist, wird die angeforderte Wärmeflußerhöhung durch die Heizungsanlage 1 durch die Erhöhung des Wärmeflusses *Q̇*₁ aus der Brennkraftmaschine 2 entnommen, da erhöhter Kraftstoffverbrauch bei der nunmehr vorgegebenen Arbeitsweise unerheblich ist.

Ergänzend wird darauf hingewiesen, daß die Werte der normierten Skalen, die den Funktionskomponenten 1 bis 5 zugeordnet sind, entweder in den den Funktionskomponenten jeweils zugeordneten elektronischen Einheiten 6.1 bis 6.5 oder beispielsweise vom zentralen Steuergerät 1.1 selbst gebildet werden, in Abhängigkeit von den hierfür erforderlichen Sensorsignalen, die anstelle von elektronischen Einheiten der Funktionskomponenten mit dem zentralen Steuergerät 1.1 verbunden sind.

Abschließend werden Beispiele für die Ansteuerung von einzelnen Funktionskomponenten zugeordneten Aktuatoren aufgeführt, über die die Wärmeflüsse der einzelnen Funktionskomponenten beeinflußt werden können:

Beispielsweise kann der Wärmefluß *Q̇*₅ in die Heizungsanlage 1 durch die Ansteuerung des Ventils 19 vorgenommen werden. Eine Erhöhung des von der Brennkraftmaschine 2 abgehenden Wärmeflusses *Q̇*₁ ist beispielsweise durch Schließen der Kupplung 7 zum Klimakompressor 8 und damit durch Erhöhung der von der Brennkraftmaschine 2 angeforderten Leistung möglich. Eine Reduzierung des von der Brennkraftmaschine 2 abgehenden Wärmeflusses *Q̇*₁ wird beispielsweise entweder durch die Erhöhung der Drehzahl der Kühlmittelpumpe 16 oder durch die Ansteuerung des Thermostatventils 15 derart, daß Kühlmittel hauptsächlich über den Kühler 3 fließt, erreicht.

Zur Erhöhung des dem Kühler 3 zugeführten Wärmeflusses *Q̇*₄ wird beispielsweise die Drehzahl des Lüfters 14 erhöht, um das Kühlmittel, das durch den Kühler 3 fließt, stärker abzukühlen.

Der von der Standheizung 5 abgehende Wärmefluß *Q̇*₃ ist beispielsweise durch Abschalten des Heizers 17 reduzierbar. Der von dem Latentwärmespeicher 4 abgehende Wärmefluß *Q̇*₂ wird beispielsweise mittels des Ventils 18 verändert.

Ergänzend wird darauf hingewiesen, daß die Brennkraftmaschine 2 beispielsweise während der Warmlaufphase auch einen der Brennkraftmaschine 2 zugeführten Wärmefluß aufweisen kann. Auch kann beim Aufladen des Latentwärmespeichers 4 ausschließlich ein dem Latentwärmespeicher 4 zugeführter Wärmefluß auftreten.

Durch dieses erfindungsgemäße Ausführungsbeispiel wird ein Wärmeflußverbund geschaffen, durch den mittels eines zentralen Wärmeflußmanagements ein optimaler Gesamtwirkungsgrad des insbesondere durch das Kühlmittelleitungssystem transportierten Wärmeflusses erreicht wird.

## Patentansprüche

1. Wärmeflußverbund in Kraftfahrzeugen bestehend aus einem zusammenhängenden Kühlmittelleitungssystem (6), aus mit dem Kühlmittelleitungssystem (6) wirkverbundenen Funktionskomponenten (1, 2, 3, 4, 5), aus den Funktionskomponenten zugeordneten Sensoren (13, 20 bis 28; Sₕ, Sᵣ) und Aktuatoren (7, 14 bis 19, EV) zur Ermittlung und Beeinflussung der von den Funktionskomponenten abgehenden Wärmeflüsse (*Q̇*₁, *Q̇*₂, *Q̇*₃) sowie der den Funktionskomponenten zugeführten Wärmeflüsse (*Q̇*₄, *Q̇*₅), und aus einem zentralen elektronischen Steuergerät (1.1), das in Abhängigkeit von den Ist-Wärmeflüssen und den Soll-Wärmeflüssen eine Beeinflussung der den Funktionskomponenten zugeordneten Wärmeflüsse derart vornimmt, dass die Summe aller von den Funktionskomponenten abgehenden Wärmeflüsse in etwa gleich der Summe aller den Funktionskomponenten zugeführten Wärmeflüsse ist, wozu mindestens eine Funktionskomponente (2) mit einer elektronischen Einheit (6.2) ausgestattet ist, die den momentanen lst-Wärmefluß und/oder die momentan mögliche Wärmeflußänderung zumindest der ihr zugeordneten Funktionskomponente (2) an das zentrale Steuergerät (1.1) übermittelt.

2. Wärmeflußverbund nach Patentanspruch 1, **dadurch gekennzeichnet, dass** der momentane Ist-Wärmefluß und/oder die momentan mögliche Wärmeflußänderung dem zentralen Steuergerät (1.1) in normierter Form übermittelt wird.

3. Wärmeflußverbund nach Patentanspruch 1 oder 2, **dadurch gekennzeichnet, dass** das zentrale Steuergerät (1.1) einer Funktionskomponente (1) zugeordnet ist.

4. Wärmeflußverbund nach einem der Patentansprüche 1 bis 3, **dadurch gekennzeichnet, daß** das zentrale Steuergerät (1.1) mittels der Sensoren und/oder mittels den Funktionskomponenten zugeordneter elektronischer Einheiten (6.1 bis 6.2) die momentanen Ist-Wärmeflüsse und/oder die momentan möglichen Wärmeflußänderungen sowie gegebenenfalls von Funktionskomponenten angeforderte Soll-Wärmeflüsse ermittelt und die Einstellung der Soll-Wärmeflüsse entsprechend vorgegebener Arbeitsweisen vornimmt.

## Claims

1. A thermal flux array in a motor vehicle, comprising a continuous coolant conveying system (6), functional components (1, 2, 3, 4, 5) connected for operation to the coolant system (6), sensors (13, 20-28; Sₕ, Sᵣ) associated with the functional components, actuators (7, 14-19, EV) for determining and influencing the heat flows (Q̇₁, Q̇₂, Q̇₃) given off by the functional components and the heat flows (Q̇₄, Q̇₅) supplied to the functional components and a central electronic control unit (1.1) which influences the heat flows associated with the functional components in dependence on the actual heat flows and the set heat flows so that the sum of all outgoing heat flows from the functional components is approximately equal to the sum of all heat flows supplied to the functional components, to which end at least one functional component (2) is equipped with an electronic unit (6.2) which transmits the instantaneous actual heat flow and/or the instantaneous possible change in the heat flow at least for the functional component (2) associated therewith to the central control unit (1.1).

2. A thermal flux array according to claim 1, **characterised in that** the instantaneous actual heat flow and/or the instantaneous possible change in the heat flow is transmitted to the central control unit (1.1) in standardised form.

3. A thermal flux array according to claim 1 or 2, **characterised in that** the central control unit (1.1) is associated with a functional component (1).

4. A thermal flux array according to any of claims 1 to 3, **characterised in that** the central control unit (1.1), via the sensors and/or via the functional components of associated electronic units (6.1 to 6.2) determines the instantaneous actual heat flows and/or the instantaneous possible changes in heat flow and, when applicable, the set heat flows required by functional components and adjusts the set heat flows in accordance with preset operating modes.

## Revendications

1. Ensemble de flux thermiques pour véhicule automobile composé de la réunion d'un système de conduites de liquide de refroidissement (6) et de composants fonctionnels (1, 2, 3, 4, 5) coopérant avec le système de conduites de liquide de refroidissement (6), de capteurs (13, 20-28 ; Sh, Sr) associés aux composants fonctionnels et d'actionneurs (7, 14-19, EV) pour déterminer et influencer les flux thermiques (Q₁, Q₂, Q₃) sortants des composants fonctionnels et les flux thermiques (Q₄, Q₅) fournis aux composants fonctionnels, ainsi que d'un appareil de commande électronique centrale (1.1) qui, en fonction des flux thermiques réels et des flux thermiques de consignes, influence les flux thermiques associés aux composants fonctionnels de façon que la somme de tous les flux thermiques sortants des composants fonctionnels soit sensiblement égale à la somme de tous les flux thermiques fournis aux composants fonctionnels, pour lequel au moins un composant fonctionnel (2) est équipé d'une unité électronique (6.2), qui transmet le flux thermique réel instantané et/ou la variation instantanée possible de flux thermiques d'au moins un des composants fonctionnels (2) qui lui sont associés au niveau de l'appareil de commande centrale (1.1).

2. Ensemble à flux thermiques selon la revendication 1,
**caractérisé en ce qu'**
on transmet le flux thermique réel instantané et/ou la variation instantanément possible de flux thermiques à l'appareil de commande centrale (1.1) sous forme normalisée.

3. Ensemble à flux thermiques selon les revendications 1 ou 2,
**caractérisé en ce que**
l'appareil de commande centrale (1.1) est associé à un composant fonctionnel (1).

4. Ensemble à flux thermiques selon l'une des revendications 1 à 3,
**caractérisé en ce que**
l'appareil de commande centrale (1) détermine à l'aide de capteurs et/ou d'unités (6.1, 6.2) électroniques associées aux composants fonctionnels, les flux thermiques réels instantanés et/ou les variations instantanément possibles de flux thermiques et le cas échéant les flux thermiques de consigne demandés aux composants fonctionnels, et règle des modes de fonctionnement prédéterminés correspondant aux flux thermiques de consigne.
